# EUROPEAN PATENT APPLICATION

(11) **EP 3 396 128 A1**
(43) Date of publication of application: **31.10.2018**
(21) Application number: 17174228.1
(22) Date of filing: 02.06.2017
(51) Int. Cl.: F01N 3/20, F01N 3/28, F01N 1/00

(54) **NOISE ATTENUATOR AND METHOD OF INTRODUCING REDUCING AGENT INTO EXHAUST GAS STREAM**

(30) Priority: 28.04.2017 WO PCT/FI2017/050330
(71) Applicant: Wärtsilä Finland Oy, 65100 Vaasa (FI)
(72) Inventor: HAMMARSTRÖM, David, 65100 Vaasa (FI); NOUSIAINEN, Esa, 65100 Vaasa (FI); PELTOKOSKI, Raine, 65100 Vaasa (FI); KORHONEN, Satu, 65100 Vaasa (FI)
(74) Representative: Berggren Oy, Helsinki & Oulu

(57) **Abstract**

The noise attenuator (5) for an exhaust system of an internal combustion engine (4) comprises a casing (8), at least one inner body (9a, 9b, 9c) defining a cylindrical space within the casing (8), the axial direction of the cylindrical space (9a, 9b, 9c) corresponding to the principal flow direction of exhaust gas in the noise attenuator (5), and at least one nozzle (10, 11) for introducing reducing agent into the exhaust gas stream.

## Description

### Technical field of the invention

The present invention relates to a noise attenuator for an exhaust system of an internal combustion engine in accordance with claim 1, and to a method of introducing reducing agent into the exhaust gas stream of an internal combustion engine for selective catalytic reduction, as defined in the other independent claim.

### Background of the invention

The exhaust system of an internal combustion engine contains measures for controlling and reducing release of emissions. As emissions are counted both noise from the engine cylinders and turbochargers, as well as hazardous components such as NOx from the combustion process.

### Summary of the invention

The aim of the present invention is to provide an improved method and arrangement for introducing reducing agent into an exhaust system of an internal combustion engine for selective catalytic reduction. The aim can be achieved by integrating a noise attenuator and at least one reducing agent injector into one unit. An object of the invention is therefore to provide for an exhaust system of an internal combustion engine a noise attenuator which comprises means for introducing reducing agent into exhaust gas stream. The characterizing features of the noise attenuator according to the invention are given in claim 1. Another object of the invention is to provide a method of introducing reducing agent into exhaust gas stream of an internal combustion engine for selective catalytic reduction. The characterizing features of the method are given in the other independent claim.

The noise attenuator according to the invention comprises a casing, and a minimum of one inner body defining at least one annular flow space within the casing. The noise attenuator is provided with at least one nozzle for introducing reducing agent into exhaust gas stream. The nozzle or nozzles are arranged in the flow direction of exhaust gas downstream of the inner flow barrier bodies.

In the method according to the invention, the reducing agent is injected into the exhaust gas stream in a wake area where the partial streams are merged and one of the partial streams forms an annular flow surrounding the injection(s).

With the noise attenuator and the injection method according to the invention, reducing agent is effectively evaporated and mixed with the exhaust gas. The present invention enables the exhaust system of an internal combustion engine to be arranged in a much more compact way with increased emission abatement capacity.

According to an embodiment of the invention, the nozzle or nozzles are arranged in a wake area in an imaginary extension of the noise attenuator body in the flow direction of the exhaust gas. The nozzles are equipped with one or several injection tips. According to an embodiment of the invention, the noise attenuator may include a plurality of outer nozzles for introducing reducing agent into the exhaust gas stream, where the outer nozzles are arranged in a wake area in an imaginary extension of an outer noise attenuator inner body element.

### Brief description of the drawings

Embodiments of the invention are described below in more detail with reference to the accompanying drawings, in which
Fig. 1 shows schematically an exhaust system of an internal combustion engine,
Fig. 2 shows a cross-sectional view of a noise attenuator according to an embodiment of the invention, and
Fig. 3 shows a cross-sectional view of the noise attenuator of figure 2 taken along line A-A.

### Description of embodiments of the invention

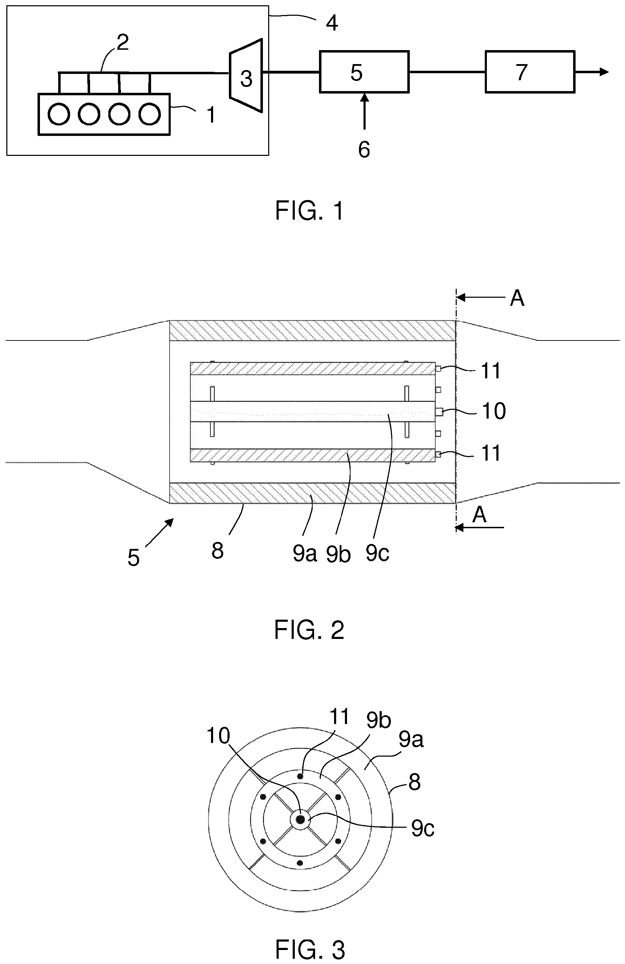

In figure 1 is shown schematically a piston engine 4 with a selective catalytic reduction (SCR) system. The exhaust gases from the cylinders, the number of which is not specified, are gathered in a manifold 2 to a turbocharger 3. The turbocharger 3 may be arranged in one stage or in several stages. The engine 4 may be a line-engine or a V-engine. The engine 4 is provided with a noise attenuator 5 and a catalytic converter 7 for selective catalytic reduction (SCR).

Selective catalytic reduction requires a reducing agent which is mixed with the exhaust gas before passing through the catalyst material in the catalytic converter 7. The reducing agent is introduced into the noise attenuator 5 from external systems 6. In the noise attenuator 5 the reducing agent is injected into the exhaust gas stream such that the reducing agent is mixed with the exhaust gas before the exhaust gas is introduced into the catalytic converter 7.

The noise attenuator 5 is arranged upstream from the catalytic converter 7. Figure 2 shows a cross-sectional view of a noise attenuator 5 according to an embodiment of the invention. Figure 3 shows a cross-sectional view taken along line A-A of figure 2. The noise attenuator 5 divides the exhaust gas stream into coaxial annular partial streams and further merges the partial streams back into a single exhaust gas stream. The noise attenuator 5 comprises a casing 8. The noise attenuator 5 further comprises one or several inner bodies 9a, 9b, 9c, which define one or more cylindrical spaces within the casing 8.

The axial direction of the cylindrical space corresponds to the principal flow direction of the exhaust gas in the noise attenuator 5.

In the embodiment of the figures, the noise attenuator 5 comprises a central nozzle 10 which is arranged in the area of an imaginary extension of a flow barrier 9c. The central nozzle 10 is thus in an area which is covered by the flow barrier 9c as seen from the flow direction of the exhaust gas. The noise attenuator 5 may additionally or alternatively comprise a plurality of outer nozzles 11 which are arranged in the area of an imaginary extension of one or more of the inner bodies 9a, 9b, 9c. The outer nozzles 11 are thus arranged in an area, which is covered by an inner body 9a, 9b, 9c as seen from the flow direction of the exhaust gas. A wake zone is formed in each area covered by an inner body 9a, 9b, 9c. The reducing agent is sprayed into these wake zones. The minimum number of nozzles is one.

It will be appreciated by a person skilled in the art that the invention is not limited to the embodiments described above, but may vary within the scope of the appended claims.

## Claims

1. A noise attenuator (5) for an exhaust system of an internal combustion engine (4), the noise attenuator (5) comprising
- a casing (8),
- at least one inner body (9a, 9b, 9c) defining a cylindrical space within the casing (8), the axial direction of the cylindrical space (9a, 9b, 9c) corresponding to the principal flow direction of exhaust gas in the noise attenuator (5), and
- at least one nozzle (10, 11) for introducing reducing agent into the exhaust gas stream.

2. A noise attenuator (5) according to claim 1, wherein the noise attenuator (5) comprises at least one central nozzle (10) for introducing reducing agent into the exhaust gas stream, wherein the central nozzle (10) is arranged in a wake area of an imaginary extension of an inner body (9a) in the flow direction of the exhaust gas.

3. A noise attenuator (5) according to claim 1 or 2, wherein the noise attenuator (5) comprises a plurality of outer nozzles (11) for introducing reducing agent into the exhaust gas stream, wherein the outer nozzles (11) are arranged in a wake area of an imaginary extension of one or more inner bodies (9a, 9b, 9c) in the flow direction of the exhaust gas.

4. A method of introducing reducing agent into exhaust gas stream of an internal combustion engine (4) for selective catalytic converter (7), the method comprising a step of introducing exhaust gas stream into a noise attenuator (5), which divides the exhaust gas stream into annular streams and further merges the streams back into a single exhaust gas stream, wherein the reducing agent is injected into the exhaust gas stream in a wake area where the annular streams are merged.
